# EUROPEAN PATENT SPECIFICATION

(11) **EP 2 591 649 B1**
(45) Date of publication and mention of the grant of the patent: **06.05.2015**
(21) Application number: 11188847.5
(22) Date of filing: 11.11.2011
(51) Int. Cl.: A01B 33/14, F16B 21/04

(54) **Quick fit system for fitting a blade in an agricultural machine and corresponding agricultural machine.**
Schnelleinbausystem zum Einbauen einer Klinge in eine landwirtschaftliche Maschine und entsprechende landwirtschaftliche Maschine
Système rapide de fixation d'une pale dans une machine agricole et machine agricole correspondante

(43) Date of publication of application: 15.05.2013
(73) Proprietor: Howard Ibérica S.A., 08520 Les Franqueses del Vallès (ES)
(72) Inventor: Surinach Olivé, Eudald, 17450 Hostalric (ES); Silvestre Padros, Juan, 08445 Canoves (ES)
(74) Representative: Curell Suñol S.L.P.

(56) References cited:
- EP-A1- 2 052 594
- EP-A2- 0 415 457
- DE-U1- 20 302 665
- GB-A- 1 468 422
- GB-A- 2 403 121
- US-A1- 2004 109 724
- US-A1- 2005 084 361
- US-A1- 2007 122 254

## Description

### Field of the invention

The invention relates to a quick fit system for fitting a blade to the attachment support of an agricultural soil tilling machine, ***according to the preamble of claim 1***

The invention relates also to an agricultural soil tilling machine that uses said quick fit system.

### State of the art

In agricultural soil tilling machines the blades are an element that suffers a strong wear due to the hard working conditions to which they are subjected, particularly due to the hardness of the ground, the humidity or the stones which the blades strike against. Also, depending on the climate and when sowing starts, the ground preparation tasks must often be carried out over a very short period of days. This obliges tilling the soil during particularly long days which increase the problem even further, as during soil tilling it is not unusual for the blades to bend or break. Because of this, irregularities occur in the cultivated soil.

Thus, in order to correct this problem it is essential to replace the blades as soon as possible. However, replacing the blades is a complicated procedure and rarely is it carried out *in situ* in the field. This is due to the fact that in the machines of the state of the art the blades are secured by screws. Due to the damp, dusty and stony environment in which this type of machines operate, the heads of the screws securing the blades are usually in poor condition. Also, the tightening torque of these screws in order to prevent them from loosen during soil tilling can reach 200 Nm. Thus, changing a blade *in situ* is rather complicated because even though the machine operator is equipped with tools, the screws are jammed or the head thereof is so worn that loosening the screw requires special tools that are not available in the field. This means that the operator has to take the soil tilling machine to a specialised workshop where the damaged blades can be changed. Obviously, this means stopping the cultivation tasks and therefore loosing time. On large farms, attempts are made to overcome this by providing various soil tilling machines so as to avoid stopping, but this is an additional economic expense.

Document GB2403121A proposes a blade assembly device of a rotary tiller wherein the blades of each hoe are secured by means of a single screw, which can reduce the above-mentioned problem but does not satisfactorily solves the easy and quick replacement of the blades.

Document DE-U-203 02 665 discloses a device normally pulled by a mini tractor and is fitted with several drive shafts for the outer and the inner rotating units. A carrying plate is attached to the lower end of the shafts, each fitted with two spikes. The inner spikes are permanently joined, while the outer spikes can be adjusted in relation to the width of the individual row. The upper, horizontal segments of the spikes are guided in a horizontal space provided at the double-walled outer plate and locked with bolts in the required position.

### Disclosure of the invention

It is an object of the invention to provide a system for quickly fitting a blade to the attachment support of an agricultural soil tilling machine of the type indicated at the beginning, which facilitates changing the blades *in situ* and which consequently avoids prolonged stopping periods in the intensive soil tilling tasks on a farm.

This object is achieved by means of a system for quickly fitting a blade of the type indicated at the beginning, characterized ***by the characterizing portion of claim 1.***

This way, unlike the conventional systems using screws, dismantling the blade is extremely simple and is less sensitive to the humidity, dirt and corrosion leading conventional screws to jam. This means that the operator can change the blades directly on the farm with a very short interruption period, as it is not necessary to go to any workshop. It is worth mentioning that the force needed to keep the attachment means according to the invention in the locking position is small, as the stress from the blades is mainly tangent. On the other hand, in the case of the conventional fitting using screws, the tightening torque is essential so as to prevent said screws from loosening.

Also, the invention covers a series of preferable characteristics that are the object of the dependent claims and the usefulness thereof will be highlighted.

The second supporting end stop is an eccentric which in said release position is inside the cross section of said fixed part, whereas in said locking position it projects from the cross section of said fixed part, whereby the unit facilitates dismantling because the attachment means can be dismantled from one side of the blade support and replacement of the blade is facilitated.

Preferably the fixed and movable parts both in the locking position, and in the release position, form a single unit that forms a compact attachment system which prevents mud from entering inside and therefore makes the system more robust.

Preferably the retention means is a bayonet lock and in a particularly preferable way, the retention means comprises an annular groove provided with at least one notch transverse to said annular groove, a pin adapted to be guided inside said annular groove during the relative rotation between said fixed and movable parts and preloaded elastic means for forcing said pin towards the bottom of said transverse notch when said pin passes in front of said transverse notch during said relative rotation, which simplifies assembling and dismantling the attachment means.

Alternatively, the retention means is a neodymium magnet with which a particularly simple configuration is obtained.

In one embodiment the edges of said attachment end of said blade comprises a first and second side notches with a circular sector shape and the first notch is complementary to the cross section of the attachment means, whereas the second notch is complementary to a projection with a circular sector shape provided in the housing.

In a preferable embodiment of the system, two adjacent blades are arranged so that their respective first notches are opposite one another and the blades share one and the same attachment means, which facilitates changing a complete set of blades.

Likewise, the invention also includes other features of detail illustrated in the detailed description of an embodiment of the invention and in the accompanying figures.

### Brief description of the drawings

Further advantages and characteristics of the invention are apparent from the following description, in which, without any limitative character, there are related preferred embodiments of the invention, with reference to the accompanying drawings, in which:
Fig. 1, a perspective view of the shaft of a rotary tiller comprising a first embodiment of the quick fit system for fitting a blade according to the invention.
Fig. 2, a front perspective view of the first embodiment of the quick fit system for fitting a blade in Figure 1.
Fig. 3, a rear perspective view of the quick fit system for fitting a blade.
Fig. 4, a front view of the system according to the invention, omitting the front part of the support to show the inside of the system.
Fig. 5, a longitudinal section along the system attachment means.
Fig. 6, a front perspective view of the attachment means.
Fig. 7, a rear perspective view of the attachment means.
Fig. 8, an exploded perspective view of the attachment means.
Fig. 9, a front view of a tool for unlocking the attachment means in Figures 6 to 8.
Fig. 10, a longitudinal section view of the tool in Figure 9.
Fig. 11, a rear perspective view of a second embodiment of the attachment means.
Fig. 12, a longitudinal sector along the attachment means in Figure 11.

### Detailed description of some embodiments

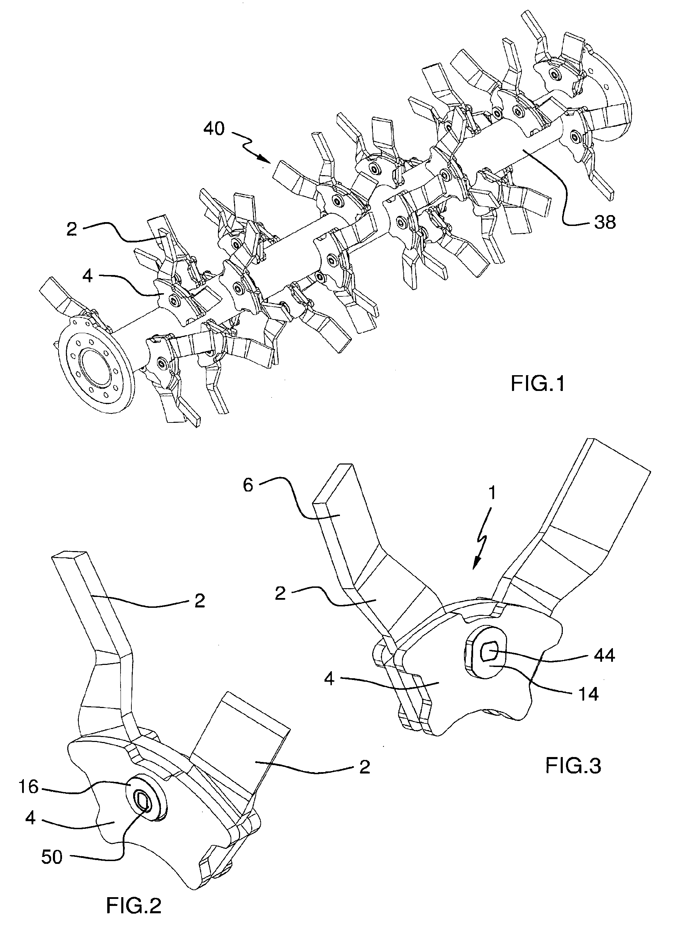

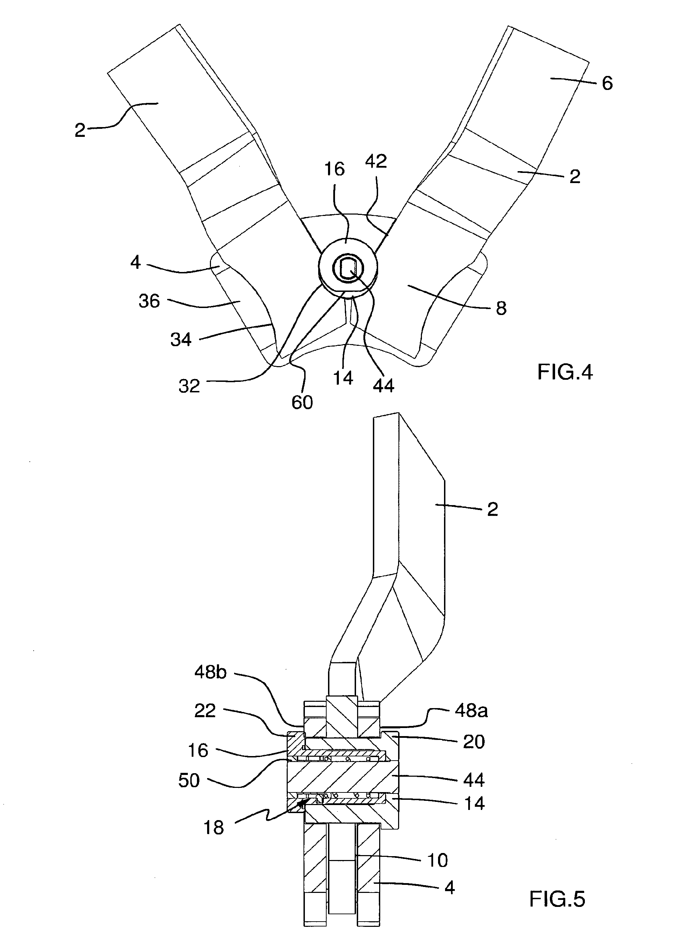

Figures 1 to 10 show a first embodiment of the quick fit system for fitting the blade 2 to the attachment support 4 of an agricultural soil tilling machine. An example of a machine on which the system according to the invention can be applied is a rotary tiller that comprises a plurality of hoes 40 assembled, for example, by welding to a rotary shaft 38. However, the system would also be applicable to other types of non-rotary soil tilling machinery. As shown in this figure, the hoes are made from a plurality of supports 4 angularly and longitudinally offset with respect to the perimeter and length of shaft 38. In this preferable embodiment, each support 4 carries two blades 2. Nevertheless, the invention also contemplates the fact that the each blade 2 be attached individually.

Support 4 has a housing 10 for blade 2, delimited by a straight wall 42 and a curved wall formed by a protrusion 36 with a circular sector shape.

In turn, each blade 2 has a leading end 6 and an attachment end 8. The edges of the attachment end 8 of each blade 2 have respectively two notches 32, 34 with a circular sector shape. As will be explained later, the first notch 32 is complementary to the cross section of attachment means 12 of blade 2, whereas the second notch 34 is complementary to protrusion 36, the blade being guided through the whole of the housing 10.

When attachment end 8 is inserted into housing 10 and attachment means 12 are inserted through support 4, blade 2 remains imprisoned between attachment means 12 and protrusion 36 by a positive fit connection.

Attachment means 12 comprise a fixed part 14, in form of a bushing, which has a first supporting end stop 20 on the end stop face 48a of support 4. Also inside thereof fixed part 14 has a central guiding pin 44 that is fixedly assembled in the bushing thanks to a retention ring 52 onto which click pins 54 associated with pin 44.

On the other hand, attachment means 12 have a movable part 16 which is provided with a second supporting end stop 22 that secures blade 2 when second supporting end stop 22 rests on the end stop face 48b. Therefore, fixed and movable parts 14, 16 are mutually lockable with respect to one another by retention means 18 via a relative rotation of less than 360º to attach blade 2 in a service position. In the invention the service position is understood to be that position in which blade 2 cultivates the soil in the field. The locking between fixed and movable parts 14, 16 is achieved by starting from a release position wherein blade 2 can be dismantled by removing attachment means 12 from their seat in support 4, to a locking position wherein blade 2 remains secured in the service position.

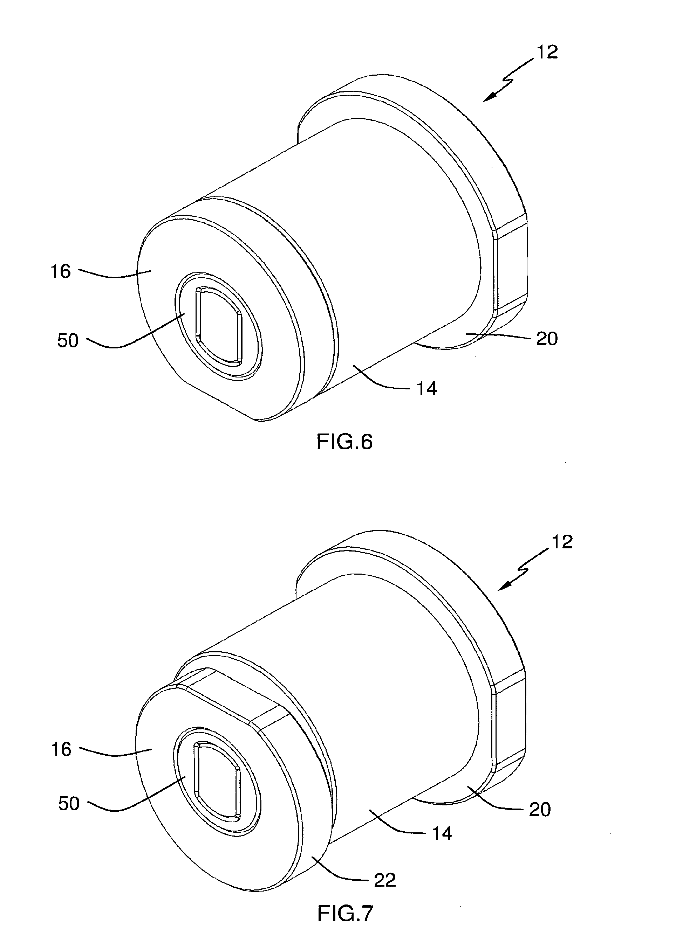

In this embodiment, second supporting end stop 22 is an eccentric which in the release position (see Figure 6) is inside the cross section of fixed part 14, whereas in the locking position it projects from the cross section of said fixed part 14 and abuts against the end stop face 48b of support 4 (Figure 7). In particular, in this case, the relative rotation between the fixed and movable parts 14, 16 from the release position to the locking position is 180º. Using an eccentric provides the advantage that attachment means 12 are always inserted and removed from the same side of support 4.

Also the figures show that the eccentric has a recess 60 to facilitate handling as will be seen later.

Fixed and movable parts 14, 16 of attachment means 12 form a single unit, both in the locking position and in the release position, which reduces the entrance of dirt, mud and humidity in the locking device and improves its robustness. It is worth mentioning that in an alternative embodiment, the eccentric of movable part 16 could be replaced with a circumferential rim similar to first end stop 20. However, in this case fixed and movable parts 14, 16 could not form a single unit, as instead in the release position they would be separate and each one would be removed from each side of support 4.

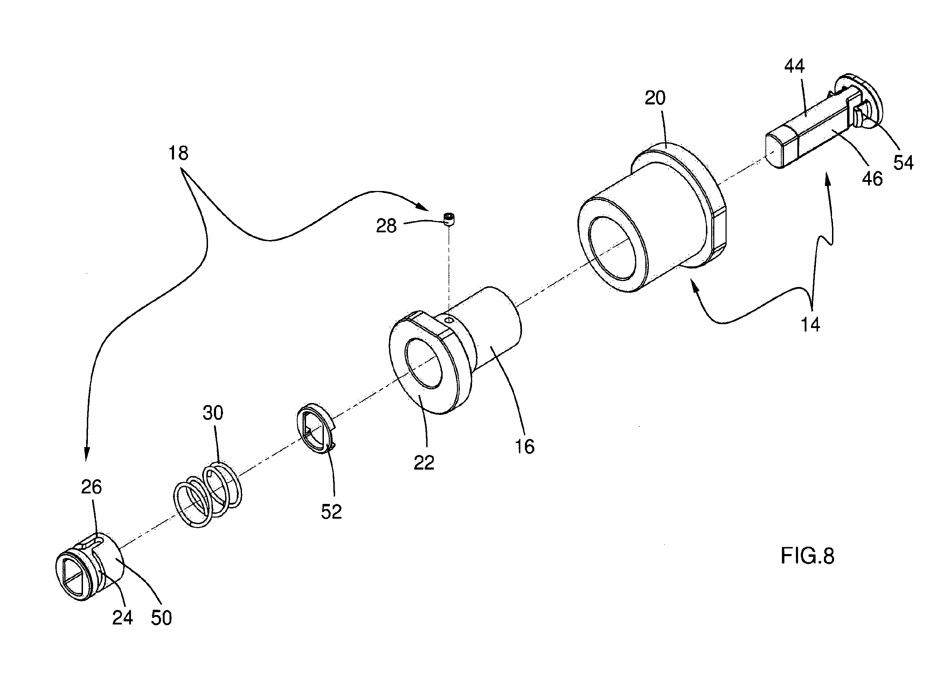

Figure 8 shows that retention means 18 are a bayonet lock. To this end, in this case, fixed part 14 of attachment means 12 has an inner cylindrical bushing 50 provided with an annular, perimetral and continual groove 24 which, in turn, has two notches 26 transverse to groove 24 diametrically opposite to one another. Inner bushing 50 is guided in fixed part 14 and is longitudinally movable on pin 44. In addition, by resting inner bushing 50 on the two flat faces 46 of pin 44 the former is prevented from rotating. Movable part 16 has a pin 28, formed by a setscrew, which projects towards groove 24 and which is adapted for being guided inside the latter. Inner bushing 50 is biased by elastic means 30 which push it away from end stop 20 of fixed part 14. Elastic means 30 are in this case a spring. During the relative rotation between fixed and movable parts 14, 16, as soon as pin 28 passes in front of transverse notch 26, due to the action of the spring, pin 28 enters as far as the bottom of the transverse notch to secure the locking position of attachment means 12, as inner bushing 50 moves pin 44 longitudinally until pin 28 abuts against the bottom of transverse notch 26.

It is worth mentioning that in order to reduce the risk of handling and accidentally moving inner bushing 50, as shown in the figures, pin 44 extends the whole length of attachment means 12 and inner bushing 50 is hollow. This way, from the surface of movable part 16 only a ring can be seen that is difficult to manipulate accidentally.

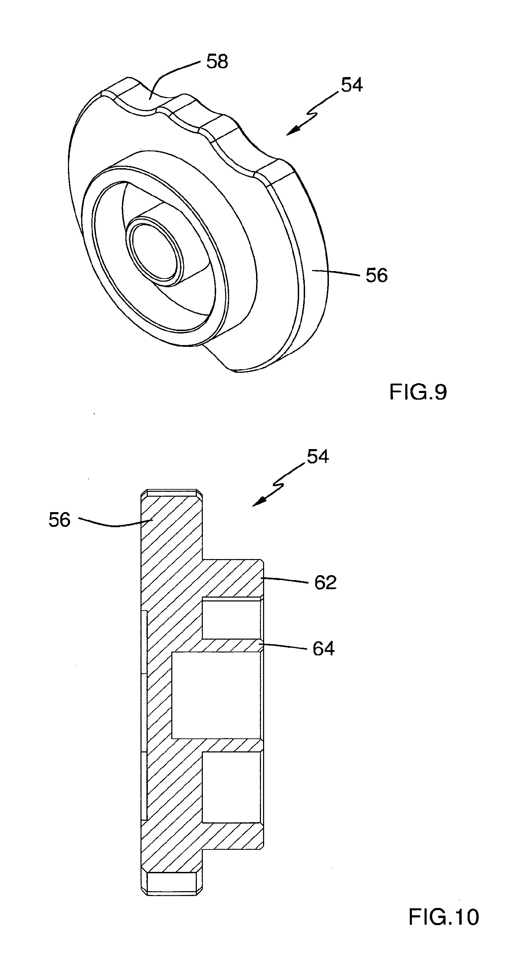

Thus, in order to facilitate handling inner bushing 50 and allow attachment means 12 to lock and unlock, although it is not essential, optionally it is possible to use the tool 54 shown in Figures 9 and 10. This tool 54 has a handle 56 with a plurality of concavities 58 adapted to the fingers of the user. From handle 56 a first cylindrical projection 62 protrudes, the inner surface of which is complementary to the perimeter of the eccentric of movable part 16, in other words it adjusts to recess 60 provided on the eccentric to facilitate the rotation of movable part 16. On the other hand, a second cylindrical projection 64 is provided, complementary to the shape of inner bushing 50.

This way, to pass from the locking position (Figure 7) to the release position (Figure 6) of attachment means 12, tool 54 must fit on the perimeter of the eccentric and push inner bushing 50 inwards against the force of the spring. The optimum force considered to obtain satisfactory locking and facilitate manual unlocking by compressing the spring is between 40 and 80 N. In this embodiment, in order to compress the spring a force of 60 N must be applied.

This compression moves inner bushing 50 longitudinally and causes pin 28 to come out of transverse notch 26 until it abuts against groove 24. In this position and without releasing tool 54 the movable part 16 is rotated 180º with respect to the fixed part 14 as far as the release position in which movable part 16 is inside the perimeter of the fixed part. In this position tool 54 is removed and with the force of the spring, pin 28 is inserted into the corresponding transverse notch 26 and remains secured in the release position. In this position, attachment means 12 can be removed from their seat in support 4 and blades 2 can be dismantled.

As can also be appreciated in the figures, in order to reduce the number of components to assemble and dismantle during the replacement of blades 2, two adjacent blades 2 are arranged so that their respective first notches 32 are opposite one another so that they share one and the same attachment means 12.

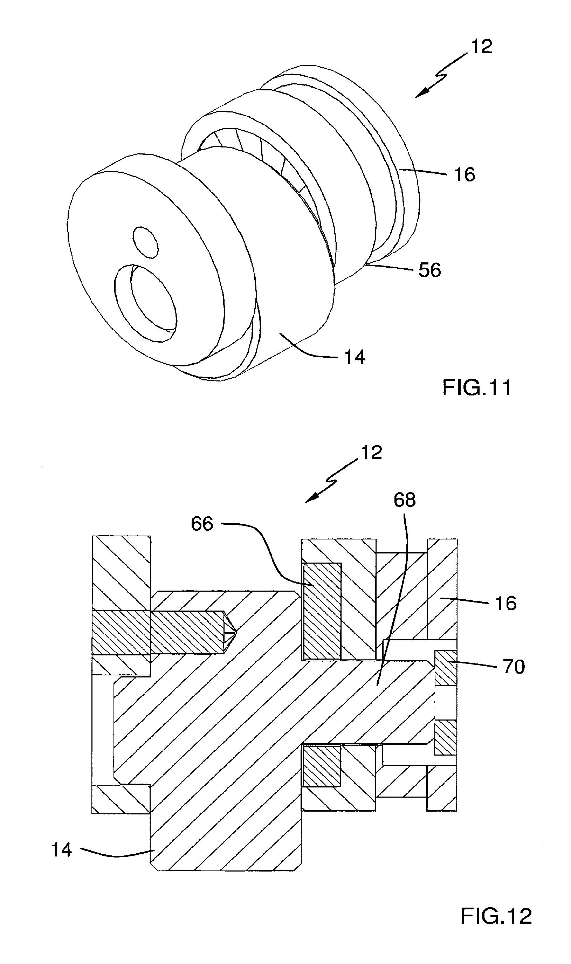

Finally, Figures 11 and 12 show a second embodiment of attachment means 12 applied in the system according to the invention. As in the preceding case, the system is based on a fixed part 14 and a movable part 16 rotatable with respect to the fixed part at an angle of less than 360º in order to change between the locking and release positions. Also, in the case of the movable part 16 an eccentric mechanism is also used.

The substantial difference in this embodiment is that retention means 18 are a neodymium magnet 66. Thus, movable part 16 can be longitudinally moved on rod 68 until it abuts against end stop 70. Then the rotation can be performed freely to exchange both positions of attachment means 12.

## Claims

1. Quick fit system for fitting a blade (2) to the attachment support (4) of an agricultural soil tilling machine, the system comprising a blade (2), a support (4) and attachment means (12), said blade (2) comprising a leading end (6) and an attachment end (8) inserted into a housing (10) of said support (4) and secured by means of a positive fit connection by said attachment means (12) passing through said support (4), said attachment means (12) comprising
[a] a fixed part (14) provided with a first supporting end stop (20),
[b] a movable part (16) provided with a second supporting end stop (22) and
[c] said fixed and movable parts (14, 16) being mutually lockable with respect to one another by retention means (18) via a relative rotation of less than 360º to secure said blade (2) in a service position starting from a release position in which said blade (2) can be dismantled, to a locking position in which said blade (2) remains secured in said service position,
**characterized in that**
[d] said second supporting end stop (22) is an eccentric which in said release position is inside the cross section of said fixed part (14), whereas in said locking position it projects from the cross section of said fixed part (14).

2. Quick fit system for fitting a blade (2) according to claim 1, **characterized in that** said fixed and movable parts (14, 16) both in the locking position, and in the release position, form a single unit.

3. Quick fit system for fitting a blade (2) according to claim 1 or 2, **characterized in that** said retention means (18) is a bayonet lock.

4. Quick fit system for fitting a blade (2) according to any of the claims 1 to 3, **characterized in that** said retention means (18) comprises an annular groove (24) provided with at least one notch (26) transverse to said annular groove (24), a pin (28) adapted to be guided inside said annular groove (24) during the relative rotation between said fixed and movable parts (14, 16) and preloaded elastic means (30) for forcing said pin (28) towards the bottom of said transverse notch (26) when said pin (28) passes in front of said transverse notch (26) during said relative rotation.

5. Quick fit system for fitting a blade (2) according to claim 1 or 2, **characterized in that** said retention means (18) is a neodymium magnet (66).

6. Quick fit system for fitting a blade (2) according to any of the claims 1 to 5, **characterized in that** the edges of said attachment end (8) of said blade (2) comprises a first and second side notches (32, 34) with a circular sector shape and **in that** said first notch (32) is complementary to the cross section of said attachment means (12), whereas said second notch (34) is complementary to a projection (36) with a circular sector shape provided in said housing (10).

7. Quick fit system for fitting a blade (2) according to claim 6, **characterized in that** two adjacent blades (2) are arranged so that their respective first notches (32) are opposite one another and said blades (2) share one and the same attachment means (12).

8. Agricultural soil tilling machine comprising a quick fit system for fitting a blade (2) according to any of the claims 1 to 7.

9. Agricultural soil tilling machine comprising a quick fit system for fitting a blade (2) according to claim 8, **characterized in that** it comprises a rotary shaft provided with a plurality of blades (2).

10. Agricultural soil tilling machine according to claim 8 or 9, **characterized in that** it is a rotary tiller.

## Patentansprüche

1. Schnelleinbausystem zum Einbauen eines Messers (2) in den Verbindungsträger (4) einer landwirtschaftlichen Bodenbearbeitungsmaschine, wobei das System ein Messer (2), einen Träger (4) und Verbindungsmittel (12) umfasst, wobei das Messer (2) ein vorderes Ende (6) und ein Verbindungsende (8), welches in einem Gehäuse (10) des Trägers (4) eingeführt und durch eine formschlüssige Verbindung gesichert ist indem die Verbindungsmittel (12) durch den Träger (4) gehen, umfasst, wobei die Verbindungsmittel (12) Folgendes umfassen
[a] ein festes Teil (14), welches mit einem ersten tragenden Endanschlag (20) versehen ist,
[b] ein bewegliches Teil (16), welches mit einem zweiten tragenden Endanschlag (22) versehen ist und
[c] wobei das feste Teil (14) und das bewegliche Teil (16) mit Haltemitteln (18) durch eine relative Drehung von weniger als 360º gegeneinander verriegelt werden können, um das Messer (2) in einer Betriebsstellung zu sichern, ausgehend von einer Freigabestellung, in welcher das Messer (2) abgenommen werden kann, bis zu einer Verriegelungsstellung, in welcher das Messer (2) in der Betriebsstellung gesichert bleibt,
**dadurch gekennzeichnet, dass**
[d] der zweite tragende Endanschlag (22) ein Exzenter ist, welcher sich in der genannten Freigabestellung innerhalb des Querschnitts des festen Teils (14) befindet, während er in der Verriegelungsstellung von dem Querschnitt des festen Teils (14) herausragt.

2. Schnelleinbausystem zum Einbauen eines Messers (2) nach Anspruch 1, **dadurch gekennzeichnet, dass** das feste Teil (14) und das bewegliche Teil (16), sowohl in der Verriegelungsstellung als auch in der Freigabestellung, eine einzige Einheit bilden.

3. Schnelleinbausystem zum Einbauen eines Messers (2) nach Anspruch 1 oder 2, **dadurch gekennzeichnet, dass** die Haltemittel (18) ein Bajonettverschluss sind.

4. Schnelleinbausystem zum Einbauen eines Messers (2) nach einem der Ansprüche 1 bis 3, **dadurch gekennzeichnet, dass** die Haltemittel (18) eine ringförmige Nut (24), welche mit zumindest einer Aussparung (26) transversal zur ringförmigen Nut (24) versehen ist, einen Stift (28), welcher dazu angepasst ist, innerhalb der ringförmigen Nut (24) während der relativen Drehung zwischen dem festen Teil (14) und dem beweglichen Teil (16) geführt zu werden, und vorgespannte elastische Mittel (30), um den Stift (28) zum Boden der transversalen Aussparung (26) zu zwingen wenn der Stift (28) während der relativen Drehung vor der transversalen Aussparung (26) läuft, umfassen.

5. Schnelleinbausystem zum Einbauen eines Messers (2) nach Anspruch 1 oder 2, **dadurch gekennzeichnet, dass** die Haltemittel (18) ein Magnet (66) aus Neodym sind.

6. Schnelleinbausystem zum Einbauen eines Messers (2) nach einem der Ansprüche 1 bis 5, **dadurch gekennzeichnet, dass** die Ränder des Verbindungsende (8) des Messers (2) eine erste seitliche Aussparung (32) und eine zweite seitliche Aussparung (34) mit der Form eines Kreisausschnitts umfassen, und dass die erste Aussparung (32) zum Querschnitt der Verbindungsmittel (12) komplementär ist, während die zweite Aussparung (34) zu einem Vorsprung (36) mit der Form eines Kreisausschnitts, welcher in dem Gehäuse (10) vorgesehen ist, komplementär ist.

7. Schnelleinbausystem zum Einbauen eines Messers (2) nach Anspruch 6, **dadurch gekennzeichnet, dass** zwei benachbarte Messern (2) so angeordnet sind, dass ihre jeweilige erste Aussparungen (32) zueinander entgegengesetzt sind und die Messern (2) dieselben Verbindungsmittel (12) teilen.

8. Landwirtschaftliche Bodenbearbeitungsmaschine umfassend ein Schnelleinbausystem zum Einbauen eines Messers (2) nach einem der Ansprüche 1 bis 7.

9. Landwirtschaftliche Bodenbearbeitungsmaschine umfassend ein Schnelleinbausystem zum Einbauen eines Messers (2) nach Anspruch 8, **dadurch gekennzeichnet, dass** sie eine Drehwelle umfasst, welche mit einer Vielzahl von Messern (2) versehen ist.

10. Landwirtschaftliche Bodenbearbeitungsmaschine nach Anspruch 8 oder 9, **dadurch gekennzeichnet, dass** sie eine Bodenfräse ist.

## Revendications

1. Système d'ajustement rapide de couteau (2) au support (4) de fixation d'une machine agricole à labourer, ledit système comprenant un couteau (2), un support (4) et des moyens de fixation (12), ledit couteau (2) comprenant une extrémité d'attaque (6) et une extrémité de fixation (8) insérée dans un logement (10) dudit support (4) et fixée au moyen d'une liaison par complémentarité de forme par lesdits moyens de fixation (12) traversant ledit support (4), lesdits moyens de fixation (12) comprenant:
[a] une partie fixe (14) munie d'une première butée (20) d'appui,
[b] une partie mobile (16) munie d'une deuxième butée (22) d'appui, et
[c] lesdites parties mobile et fixe (14, 16) pouvant être verrouillées l'une par rapport à l'autre par des moyens de rétention (18) au moyen d'une rotation relative inférieure à 360º, afin de fixer ledit couteau (2) dans une position de service, à partir d'une position de dégagement dans laquelle ledit couteau (2) peut être démonté et jusqu'à une position de verrouillage dans laquelle ledit couteau (2) reste fixé dans ladite position de service,
**caractérisé en ce que**
[d] ladite deuxième butée (22) d'appui est une excentrique qui dans ladite position de dégagement se trouve dans la section transversale de ladite partie fixe (14), tandis que dans ladite position de verrouillage elle fait saillie de la section transversale de ladite partie fixe (14).

2. Système d'ajustement rapide de couteau (2) selon la revendication 1, **caractérisé en ce que** lesdites parties fixe et mobile (14, 16), aussi bien dans la position de verrouillage que dans la position de dégagement, forment un seul ensemble.

3. Système d'ajustement rapide de couteau (2) selon la revendication 1 ou la revendication 2, **caractérisé en ce que** lesdits moyens de rétention (18) sont un verrouillage à baïonnette.

4. Système d'ajustement rapide de couteau (2) selon l'une quelconque des revendications 1 à 3, **caractérisé en ce que** lesdits moyens de rétention (18) comprennent une rainure (24) annulaire munie d'au moins une échancrure transversale (26) à ladite rainure (24) annulaire, une goupille (28) adaptée pour être guidée dans ladite rainure (24) annulaire pendant la rotation relative entre lesdites parties fixe et mobile (14, 16), et des moyens élastiques (30) préchargés pour forcer ladite goupille (28) vers le fond de ladite échancrure transversale (26) lorsque ladite goupille (28) passe devant ladite échancrure transversale (26) pendant ladite rotation relative.

5. Système d'ajustement rapide de couteau (2) selon la revendication 1 ou la revendication 2, **caractérisé en ce que** lesdits moyens de rétention (18) sont un aimant (66) en néodyme.

6. Système d'ajustement rapide de couteau (2) selon l'une quelconque des revendications 1 à 5, **caractérisé en ce que** les tranches de ladite extrémité de fixation (8) dudit couteau (2) comprennent une première et une seconde échancrures (32, 34) latérales qui ont une forme de secteur circulaire et **en ce que** ladite première échancrure (32) est complémentaire de la section transversale desdits moyens de fixation (12), tandis que ladite seconde échancrure (34) est complémentaire d'une saillie (36) qui a une forme de secteur circulaire et qui est agencée dans ledit logement (10).

7. Système d'ajustement rapide de couteau (2) selon la revendication 6, **caractérisé en ce que** deux couteaux (2) adjacents sont agencés de manière à ce que leurs premières échancrures respectives (32) soient en vis-à-vis entre elles et que lesdits couteaux (2) partagent des mêmes moyens de fixation (12).

8. Machine agricole à labourer, comprenant un système d'ajustement rapide de couteaux (2) selon l'une quelconque des revendications 1 à 7.

9. Machine agricole à labourer, comprenant un système d'ajustement rapide de couteaux (2) selon la revendication 8, **caractérisée en ce qu'**elle comprend un arbre rotatif muni d'une pluralité de couteaux (2).

10. Machine agricole à labourer selon la revendication 8 ou la revendication 9, **caractérisée en ce que** elle est un rotoculteur.
